Europäisches Patentamt

European Patent Office

Office européen des brevets

(11) Veröffentlichungsnummer: **0 336 122**

**A1**

(12) **EUROPÄISCHE PATENTANMELDUNG**

(21) Anmeldenummer: **89103824.2**

(22) Anmeldetag: **04.03.89**

(51) Int. Cl.⁴: **B01D 8/00 , B01D 5/00**

(30) Priorität: **31.03.88 DE 3811167**

(43) Veröffentlichungstag der Anmeldung:
**11.10.89 Patentblatt 89/41**

(84) Benannte Vertragsstaaten:
**AT BE CH DE ES FR LI NL**

(71) Anmelder: **Linde Aktiengesellschaft**
**Abraham-Lincoln-Strasse 21**
**D-6200 Wiesbaden(DE)**

(72) Erfinder: **Schiffbauer, Reiner, Dipl.-Ing.**
**Tiroler Strasse 32**
**D-8190 Wolfratshausen(DE)**

(74) Vertreter: **Schaefer, Gerhard, Dr.**
**Linde Aktiengesellschaft Zentrale**
**Patentabteilung**
**D-8023 Höllriegelskreuth(DE)**

(54) **Verfahren und Vorrichtung zur Abtrennung von kondensierbaren Bestandteilen aus einem Rohgasgemisch.**

㊼ Es wird ein Verfahren und eine Vorrichtung zur Abtrennung von kondensierbaren Bestandteilen aus einem Rohgasgemisch beschrieben, bei dem das Rohgasgemisch 1 durch eine Schüttung 8 aus Pellets eines festen tiefkalten Stoffes geführt wird. Dort wird das Rohgasgemisch abgekühlt. Die kondensierbaren Bestandteile schlaen sich an den Oberflächen der Pellets nieder und sammeln sich unterhalb der Schüttung. Kondensat 6 und gereinigtes Gas 2 können getrennt abgeführt werden.

EP 0 336 122 A1

# Verfahren und Vorrichtung zur Abtrennung von kondensierbaren Bestandteilen aus einem Rohgasgemisch

Die Erfindung betrifft ein Verfahren zur Abtrennung von kondensierbaren Bestandteilen aus einem Rohgasgemisch, eine Vorrichtung zur Durchführung des Verfahrens und eine Anwendung des Verfahrens und/oder der Vorrichtung.

Bei dem Rohgasgemisch kann es sich beispielsweise um Abluft aus Anlagen oder Tanks handeln, in der Dämpfe von umweltbelastenden oder leicht entzündlichen Stoffen wie Lösemittel oder Vergasertreibstoff enthalten sind. Aus Gründen der Sicherheit und des Umweltschutzes dürfen solche Dämpfe nicht in die Umgebung gelangen. Je nach Höhe des Preises des dampfförmigen Stoffes kann seine Abtrennung auch allein aus wirtschaftlichen Gründen sinnvoll sein.

Es ist bekannt, ein Rohgasgemisch durch indirekten Wärmetausch mit einem Kältemittel abzukühlen und die dampfförmigen Anteile durch Kondensation abzutrennen. Der indirekte Wärmetausch kann rekuperativ oder regenerativ durchgeführt werden.

Bei rekuperativ betriebenen Systemen wird während des Betriebes die Effektivität des Wärmeübergangs immer geringer, weil sich auf den Wärmeaustauschflächen erstarrtes Kondensat und Wassereis absetzt. Das kann soweit führen, daß der Strömungsweg für das Rohgasgemisch völlig blockiert wird. Deswegen muß zwischen mehreren Wärmetauschern periodisch umgeschaltet werden (DE-OS 22 37 055).

Es sind auch Verfahren vorgeschlagen worden, in denen regenerative Wärmetauscher eingesetzt werden (z.B. DE-OS 34 14 246).

Rekuperative wie regenerative Systeme weisen den Nachteil auf, daß sie keinen kontinuierlichen Betrieb und damit keine gleichbleibende Abscheidung der kondensierbaren Bestandteile gewährleisten können. Außerdem sind aufwendige und störanfällige Umschalteinrichtungen erforderlich, die hohe Betriebs- und Investitionskosten verursachen.

Bei anderen Verfahren (beispielsweise EP 66 416) wird tiefkalte Flüssigkeit in den Strom des Rohgasgemisches eingebracht und dieses durch direkten Wärmetausch abgekühlt. Diese Methode weist jedoch einen hohen Verbrauch an tiefkalter Flüssigkeit auf und ist damit energetisch ungünstig. Weiterhin ist ein aufwendiges Regelungssystem erforderlich, das die Einspritzung der beigemischten Flüssigkeit gemäß dem oft stark schwankenden Durchsatz an Rohgasgemisch dosiert.

Aufgabe der vorliegenden Erfindung ist es, ein energetisch günstiges und zuverlässig arbeitendes Verfahren zur Abtrennung von kondensierbaren Bestandteilen aus einem Rohgasgemisch zu entwik-

keln, das kontinuierlich betrieben werden kann und einen geringen apparativen Aufwand erfordert.

Diese Aufgabe wurde dadurch gelöst, daß die kondensierbaren Bestandteile durch direkten Wärmetausch mit einem festen tiefkalten Stoff kondensiert werden.

Dazu wird bevorzugt festes Kohlendioxid oder der zu kondensierende Stoff selbst, der bei kryogenen Temperaturen verfestigt wurde, verwendet. Der feste Stoff wird vorzugsweise in pelletierter Form eingesetzt, beispielsweise als zylinderförmige Teilchen mit einer Länge von etwa 15 cm und einem Durchmesser von etwa 8 bis 10 cm. Es ist auch günstig, die Pellets als muschelförmige Teilchen herzustellen. Hier ist die Oberfläche des festen tiefkalten Stoffes, die als Wärmeübergangsfläche wirkt, besonders groß.

Das Rohgasgemisch wird beim erfindungsgemäßen Verfahren durch eine Schüttung des pelletierten festen Stoffes geführt und dabei abgekühlt. Die kondensierbaren Anteile schlagen sich an den Oberflächen der festen Teilchen nieder und können unterhalb der Schüttung gesammelt und abgeführt werden.

In einer bevorzugten Ausführung des erfindungsgemäßen Verfahrens schmilzt und/oder verdampft der feste tiefkalte Stoff während der Durchführung des Verfahrens und wird entsprechend den Verlusten ersetzt.

Die Schmelz- und/oder Sublimationswärme wird dem Rohgasgemisch entzogen und trägt zu dessen Abkühlung bei. Die Verluste an festem tiefkalten Material können nach Bedarf fortlaufend oder in bestimmten Zeitintervallen durch Nachfüllen ersetzt werden. Der Verbrauch an tiefkaltem Stoff und damit der Energiebedarf des Verfahrens kann auf diese Weise sehr flexibel dem Durchsatz an Rohgasgemisch angepaßt werden. Vorzugsweise wird die Füllhöhe der Schüttung durch eine Meßeinrichtung kontrolliert und fester tiefkalter Stoff automatisch nachgefüllt. Falls nur kurzzeitig Rohgasgemisch anfällt -beispielsweise beim Befüllen eines Tanks - kann auch von vornherein genau die für die Reinigung der anfallenden Menge von Rohgasgemisch erforderliche Menge an festem tiefkalten Stoff eingefüllt werden.

Vor allem bei vertikaler Strömungsrichtung des Rohgasgemisches erweist es sich als besonders vorteilhaft, wenn gemäß einem weiteren Merkmal der Erfindung das Rohgas vor dem Wärmetausch mit dem festen tiefkalten Stoff durch Wärme- und Stoffaustausch mit kondensierten Bestandteilen vorgereinigt wird.

Dies kann beim erfindungsgemäßen Verfahren besonders günstig dadurch erreicht werden, daß die Schüttung des festen tiefkalten Stoffes im Kopf einer Stoffaustauschkolonne angeordnet wird, in der die kondensierten Anteile nach unten fließen und Rohgasgemisch nach oben strömt. Dadurch wird einerseits die Kälte des Kondensats zur Vorkühlung des Rohgases verwendet, andererseits unterstützt die Rektifizierwirkung den Trennungsprozeß.

Beim erfindungsgemäßen Verfahren liegt die Temperatur des festen tiefkalten Stoffes zweckmäßigerweise unter 223 K .

Die Erfindung betrifft außerdem eine Vorrichtung zur Durchführung des Verfahrens zur Abtrennung von kondensierbaren Bestandteilen aus einem Rohgasgemisch, bestehend aus einer Trennsäule mit einer Zuführeinrichtung für Rohgas und Abführeinrichtungen für gereinigtes Gas und für Kondensat, die durch eine Schüttung aus festem tiefkalten Stoff gekennzeichnet ist, die zwischen der Zuführeinrichtung für Rohgas und der Abführeinrichtung für gereinigtes Gas angeordnet ist.

Dabei ist es vorteilhaft, einen Nachfüllstutzen für den festen tiefkalten Stoff vorzusehen.

In einer zweckmäßigen Weiterbildung weist die erfindungsgemäße Vorrichtung einen Trennbereich auf, der zwischen der Zuführeinrichtung für Rohgas und der Schüttung angebracht ist und Füllkörper oder Packungen aufweist. Schüttung und Trennbereich werden vorzugsweise übereinander in einem gemeinsamen Gehäuse angeordnet. Man erhält so eine kompakte Einheit, die ohne großen Aufwand wärmeisoliert werden kann.

Die Vorteile der Erfindung kommen besonders bei der Anwendung des Verfahrens und/oder der Vorrichtung zur Abtrennung von verdampftem Vergasertreibstoff aus Luft zum Tragen. Dabei ist es vorteilhaft, als festen tiefkalten Stoff Kohlendioxid oder verfestigten Vergasertreibstoff zu verwenden.

Besonders bei hohen Außentemperaturen verdampfen größere Mengen von Vergasertreibstoff, der in Tanks gelagert wird. Der verdampfte Vergasertreibstoff kann mit Hilfe des erfindungsgemäßen Verfahrens aus der Abluft des Tanks zurückgewonnen werden. Dabei wird ein ununterbrochener Betrieb der Abtrennvorrichtung gewährleistet. Besonders hohe Mengen an mit verdampftem Treibstoff vermischter Abluft treten beim Befüllen von Tanks beispielsweise zum Transport des Treibstoffs auf. Hier können mit Hilfe des erfindungsgemäßen Verfahrens kurzzeitig auch große Mengen an Abluft gereinigt werden. Das Verfahren kann in diesem Fall besonders einfach betrieben werden, indem genau die Menge an festem tiefkalten Stoff eingefüllt wird, die für die Reinigung der - vorher ja genau bekannten - Menge an Abluft notwendig ist. Dabei arbeitet das Verfahren so wirtschaftlich, daß bei hohem Ölpreis der Wert des zurückgewonnen Kondensats die Betriebskosten der erfindungsgemäßen Vorrichtung übersteigt.

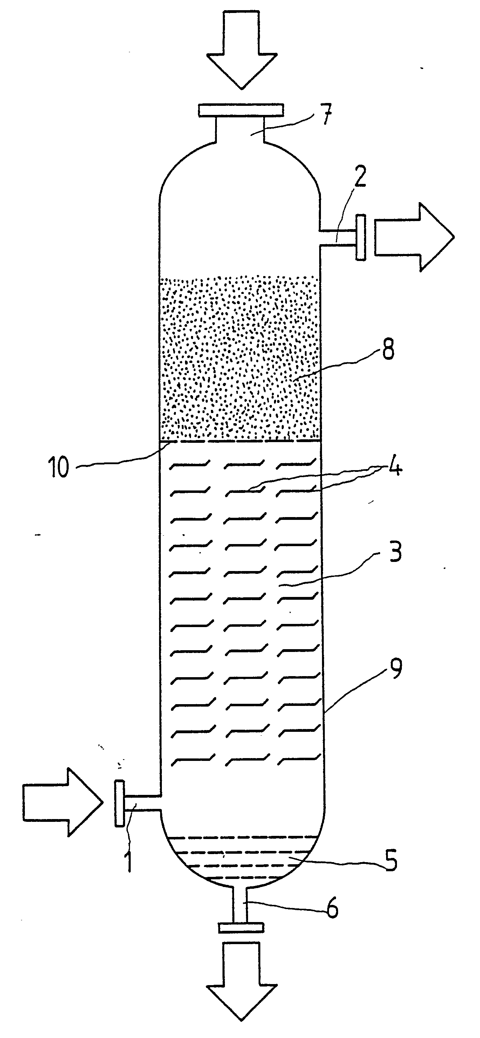

Die Erfindung wird anhand eines in der Zeichnung schematisch dargestellten Ausführungsbeispiels näher erläutert.

Die Figur zeigt eine Ausführung einer erfindungsgemäßen Vorrichtung in stehender Bauweise, die beispielsweise zur Abtrennung von Vergasertreibstoff aus Luft eingesetzt wird. In einer Kolonne 9 ist ein Boden 10 angeordnet, der sich über den gesamten Querschnitt der Kolonne erstreckt. Er ist beispielsweise aus gelochtem Blech hergestellt und trägt eine Schüttung 8 aus pelletiertem tiefkaltem Stoff. Dabei handelt es sich vorzugsweise um festes Kohlendioxid oder um verfestigten Vergasertreibstoff in der oben bereits beschriebenen Form von Pellets. Unterhalb des Bodens 10 befindet sich eine Trenneinrichtung 3, in die Packungen 4 für Stoffaustauschkolonnen eingebracht sind.

Über Leitung 1 wird zu reinigendes Rohgasgemisch (im Beispiel ein Gemisch aus Luft und verdampftem Vergasertreibstoff) in die Kolonne 9 eingeführt. Das Rohgasgemisch durchströmt erfindungsgemäß die Trenneinrichtung 3 und die Schüttung 8. Dort kondensieren die kondensierbaren Bestandteile des Gemisches (im Beispiel Vergasertreibstoff) an den Oberflächen der Pellets des tiefkalten Stoffes. Die kondensierte Flüssigkeit läuft nach unten und wirkt in der Trenneinrichtung 3 als Rücklaufflüssigkeit, so daß bereits dort ein Teil der kondensierten Bestandteile durch Rektifikation aus dem Rohgasgemisch abgetrennt wird. Durch diesen Wärme- und Stoffaustausch zwischen Kondensat und Rohgas wird die Trennwirkung der Anlage verstärkt, ohne daß zusätzlich Energie aufgewendet werden muß. Der Kopf der Trenneinrichtung 3 wird durch die ohnehin vorhandene Schüttung 9 gekühlt.

Als Produkte der Trennung werden über Leitung 2 Reingas (im Beispiel gereinigte Luft) und über Leitung 6 Kondensat (im Beispiel flüssiger Vergasertreibstoff) entnommen.

Während des Betriebes schmilzt oder verdampft der feste tiefkalte Stoff. Die dazu benötigte latente Wärme trägt zum Kühlen des Rohgasgemisches und zum Abführen der Kondensationswärme beim Verflüssigen der Dämpfe bei. Wird Kohlendioxid als fester tiefkalter Stoff verwendet, so sublimiert dieses und verläßt die Apparatur zusammen mit dem Reingas über Leitung 2. Falls die erfindungsgemäße Vorrichtung zur Abluftreinigung eingesetzt wird, kann das Kohlendioxid zusammen mit der gereinigten Luft in die Umgebung abgegeben werden. Setzt man tiefkalte Pellets des zu kondensierenden Stoffes ein, so schmelzen diese, fließen gemeinsam mit dem Kondensat in den Sumpf 5 der Kolonne 9 und werden über Leitung 6 entnommen.

Über einen erfindungsgemäßen Nachfüllstutzen 7 können Pellets des tiefkalten Stoffes eingefüllt werden, um Verluste in der Schüttung durch Schmelzen bzw. Sublimation zu ersetzen.

Falls keine zusätzliche Trenneinrichtung vorgesehen ist, kann die erfindungsgemäße Vorrichtung abweichend vom Ausführungsbeispiel der Figur auch in liegender Bauweise eingesetzt werden. Dabei durchströmt das Rohgasgemisch die Schüttung in horizontaler Richtung, das Kondensat wird ebenfalls unterhalb der Schüttung gesammelt und abgezogen.

**Ansprüche**

1. Verfahren zur Abtrennung von kondensierbaren Bestandteilen aus einem Rohgasgemisch, dadurch gekennzeichnet, daß die kondensierbaren Bestandteile durch direkten Wärmetausch mit einem festen tiefkalten Stoff kondensiert werden.

2. Verfahren nach Anspruch 1, dadurch gekennzeichnet, daß der feste tiefkalte Stoff während der Durchführung des Verfahrens schmilzt und/oder verdampft und entsprechend den Verlusten ersetzt wird.

3. Verfahren nach Anspruch 1 oder 2, dadurch gekennzeichnet, daß das Rohgas vor dem Wärmetausch mit dem festen tiefkalten Stoff durch Wärme- und Stoffaustausch mit kondensierten Bestandteilen vorgereinigt wird.

4. Verfahren nach einem der Ansprüche 1 bis 3, dadurch gekennzeichnet, daß die Temperatur des festen tiefkalten Stoffes unter 223 K liegt.

5. Vorrichtung zur Durchführung des Verfahrens nach einem der Ansprüche 1 bis 4, bestehend aus einer Trennsäule (9) mit einer Zuführeinrichtung (1) für Rohgas und Abführeinrichtungen (2,6) für gereinigtes Gas und für Kondensat, gekennzeichnet durch eine Schüttung (8) aus festem tiefkalten Stoff, die zwischen der Zuführeinrichtung (1) für Rohgas und der Abführeinrichtung (2) für gereinigtes Gas angeordnet ist.

6. Vorrichtung nach Anspruch 5, gekennzeichnet durch einen Nachfüllstutzen (7) für den festen tiefkalten Stoff.

7. Vorrichtung nach Anspruch 5 oder 6, gekennzeichnet durch einen Trennbereich (3), der zwischen der Zuführeinrichtung (1) für Rohgas und der Schüttung (8) angebracht ist und Füllkörper oder Packungen (4) aufweist.

8. Anwendung des Verfahrens nach einem der Ansprüche 1 bis 4 und/oder der Vorrichtung nach einem der Ansprüche 5 bis 7 zur Abtrennung von verdampftem Vergasertreibstoff aus Luft.

9. Anwendung nach Anspruch 8, dadurch gekennzeichnet, daß als fester tiefkalter Stoff Kohlendioxid verwendet wird.

10. Anwendung nach Anspruch 8, dadurch gekennzeichnet, daß als fester tiefkalter Stoff verfestigter Vergasertreibstoff verwendet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | NL-A- 697 933 (G. FERGUSON) <br> * Insgesamt * <br> --- | 1,2,4,5 ,9 | B 01 D 8/00 <br> B 01 D 5/00 |
| A | US-A-2 989 443 (A.J.P. MARTIN) <br> * Ansprüche 1,2; Figuren * <br> --- | 5,7 | |
| A | GB-A-1 448 369 (ALUMINIUM CO.) <br> --- | | |
| A | US-A-1 809 926 (O. EINSLER) <br> --- | | |
| A | DE-A-2 902 391 <br> (MESSERSCHMITT-BÖLKOW-BLOHM GmbH) <br> ----- | | |

RECHERCHIERTE SACHGEBIETE (Int. Cl.4)

B 01 D 5/00
B 01 D 8/00

Der vorliegende Recherchenbericht wurde für alle Patentansprüche erstellt

| Recherchenort | Abschlußdatum der Recherche | Prüfer |
|---|---|---|
| DEN HAAG | 05-07-1989 | POLESAK, H.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument